(19) Europäisches Patentamt
European Patent Office
Office européen des brevets

(11) **EP 2 962 913 B1**

(12) **EUROPÄISCHE PATENTSCHRIFT**

(45) Veröffentlichungstag und Bekanntmachung des Hinweises auf die Patenterteilung:
**15.11.2017  Patentblatt 2017/46**

(51) Int Cl.:
*B60T 8/88* *(2006.01)*       *G01L 5/28* *(2006.01)*
*B60T 17/22* *(2006.01)*

(21) Anmeldenummer: **14175525.6**

(22) Anmeldetag: **03.07.2014**

(54) **Verfahren zur Verschleißermittlung einer mechanischen Bremse**

Method for determining the wear of a mechanical brake

Procédé destiné à déterminer l'usure d'un frein mécanique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.01.2016  Patentblatt 2016/01**

(73) Patentinhaber: **Siemens Aktiengesellschaft 80333 München (DE)**

(72) Erfinder: **Heining, Hans-Dieter 97616 Bad Neustadt (DE)**

(56) Entgegenhaltungen:
**EP-A1- 1 435 470     DE-A1-102009 016 664**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Verfahren zur Ermittlung eines Gesamtverschleißes einer mechanischen Bremse eines elektrischen Antriebs, - wobei der Gesamtverschleiß durch Bremsvorgänge der Bremse hervorgerufen wird, mittels derer der elektrische Antrieb aus einer jeweiligen Bewegung abgebremst wird.

Die vorliegende Erfindung betrifft weiterhin eine Steuereinrichtung für einen elektrischen Antrieb, der mittels einer mechanischen Bremse aus einer jeweiligen Bewegung abbremsbar ist.

Die mechanischen Haltebremsen elektrischer Antriebe verschleißen durch den wiederholten Eingriff bei drehendem Motor. Dies gilt insbesondere dann, wenn Notbremsungen aus hohen Drehzahlen vorgenommen werden müssen. Wird im Rahmen der Bremsvorgänge die Verschleißgrenze der Bremse überschritten, funktioniert die Bremse ab diesem Zeitpunkt nicht mehr erwartungsgemäß. Beispielsweise ist es möglich, dass die Bremse nicht mehr das spezifizierte Haltemoment aufbringen kann, sondern nur noch ein reduziertes Haltemoment. Es ist sogar möglich, dass die Bremse überhaupt nicht mehr wirkt. Eine verschlissene Bremse bzw. zumindest deren Verschleißteile müssen daher rechtzeitig ausgewechselt werden.

Bei üblichen elektrischen Antrieben wird in der Regel keine Funktion realisiert, welche die Haltebremse bereits im Betrieb derart überwacht, dass sowohl Funktionsstörungen der Bremse als auch vorbeugend ein Bremsenverschleiß erkannt werden kann, so dass die Wartung der Haltebremse gezielt geplant werden kann.

Bekannt und in der Praxis verwendet ist eine Sicherheitsfunktion "sicherer Bremsentest". Im Rahmen dieses Tests wird überprüft, ob die Bremse noch funktioniert. Es ist eine eigene Testsequenz erforderlich, die außerhalb des normalen Betriebes des elektrischen Antriebs durchgeführt werden muss. Die Testsequenz kann daher den normalen Produktionsablauf stören, in dessen Rahmen der elektrische Antrieb eingesetzt wird. Weiterhin ist anhand der Testsequenz zwar ermittelbar, ob die Bremse momentan ordnungsgemäß funktioniert. Eine Vorhersage, wie lange die Bremse noch funktionieren wird, ist jedoch nicht möglich. Im Extremfall könnte die Bremse bereits beim nächsten Bremsvorgang versagen.

Aus der DE 101 47 817 A1 und der korrespondierenden US 2003/0061872 A1 ist ein Verfahren zur Verschleißerkennung bei einer Bremse bekannt. Im Rahmen dieses Verfahrens werden Messgrößen erfasst, anhand derer der aktuelle Verschleiß der Bremse ermittelt werden kann. Zur Durchführung dieses Verfahrens ist jedoch eine schnelle und genaue Erfassung von Strömen und Spannungen während des jeweiligen Bremsvorgangs erforderlich. Dies erfordert einen deutlichen Hardware-Aufwand und damit zusätzliche Kosten. Weiterhin ist es schwierig, das Verfahren in einer verrauschten Umgebung auszuführen, wenn also den erfassten elektrischen Ströme und Spannungen Störgrößen überlagert sind.

Weiterer relevante Verfahren sind aus EP 1435470 A1 und DE 102009016664 A1 bekannt. Die Aufgabe der vorliegenden Erfindung besteht darin, Möglichkeiten zu schaffen, mittels derer der Verschleiß einer Bremse zuverlässig ermittelt und vorhergesagt werden kann.

Die Aufgabe wird durch ein Verfahren und eine Vorrichtung mit den Merkmalen der Ansprüche 1 bzw. 3 gelöst.

Es wird im Rahmen des erfindungsgemäßen Verfahrens also nicht lediglich die Anzahl von Bremsvorgängen aufsummiert. Vielmehr wird individuell für jeden einzelnen Bremsvorgang anhand des jeweiligen Istzustands des elektrischen Antriebs zu Beginn des jeweiligen Bremsvorgangs der jeweilige Einzelverschleiß der Bremse ermittelt. Durch Aufaddieren der Einzelverschleiße über die Bremsvorgänge oder ähnliche Vorgehensweisen wird dadurch der Gesamtverschleiß der Bremse zuverlässig ermittelt.

Es ist möglich, dass der jeweilige Istzustand anhand einer Ansteuerung des elektrischen Antriebs als solchem bekannt ist. In derartigen Fällen kann der jeweilige Einzelverschleiß direkt ermittelt werden. In vielen Fällen werden jedoch zu Beginn des jeweiligen Bremsvorgangs Messwerte erfasst und wird der jeweilige Istzustand unter Verwendung der Messwerte ermittelt. Der jeweilige Istzustand ist charakteristisch für die im Rahmen des jeweiligen Bremsvorgangs von der Bremse aufzubringende Energie. Die im Rahmen des jeweiligen Bremsvorgangs von der Bremse aufzubringende Energie ist zumindest von der zu Beginn des jeweiligen Bremsvorgangs herrschenden Bewegungsenergie des elektrischen Antriebs abhängig. Es ist möglich, dass keine weitergehenden funktionalen Abhängigkeiten bestehen. Die im Rahmen des jeweiligen Bremsvorgangs von der Bremse aufzubringende Energie ist zusätzlich von einem von der Bremse aufgebrachten jeweiligen Bremsmoment und einem auf den elektrischen Antrieb wirkenden Lastmoment abhängig ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:

FIG 1    einen elektrischen Antrieb mit einer mechanischen Bremse und
FIG 2    ein Ablaufdiagramm.

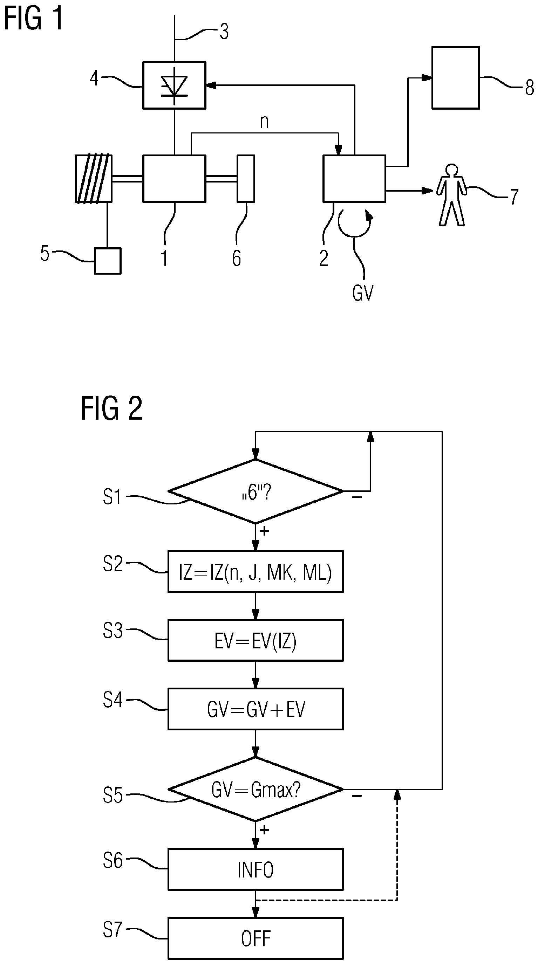

Gemäß FIG 1 wird ein elektrischer Antrieb 1 von einer Steuereinrichtung 2 gesteuert. Der elektrische Antrieb 1 ist mit einer Energieversorgung 3 verbunden, oftmals mit dem öffentlichen Stromnetz. In der Regel ist zwischen der Energieversorgung 3 und dem elektrischen Antrieb 1 ein Umrichter 4 angeordnet. Mittels des elektrischen Antriebs 1 wird eine Last 5 bewegt. Dargestellt ist in FIG 1 rein beispielhaft eine hängende Last 5. Die Last 5 könnte jedoch auch als andere Last ausgebildet sein.

Der elektrische Antrieb 1 weist eine mechanische Bremse 6 auf. Mittels der mechanischen Bremse 6 kann der elektrische Antrieb 1 aus einer jeweiligen Bewegung heraus abgebremst und in den Stillstand überführt werden.

Die Bremse 6 ist Verschleiß unterworfen. Insbesondere tritt bei jedem Bremsvorgang, bei dem der elektrische Antrieb 1 von der Bremse 6 abgebremst wird, ein jeweiliger Einzelverschleiß EV der Bremse 6 auf. Die über mehrere Bremsvorgänge auftretenden Einzelverschleiße EV summieren sich zu einem Gesamtverschleiß GV der Bremse 6. Die Ermittlung des Gesamtverschleißes GV ist Gegenstand der vorliegenden Erfindung.

Zur Durchführung des erfindungsgemäßen Verfahrens prüft die Steuereinrichtung 2 gemäß FIG 2 in einem Schritt S1, ob die mechanische Bremse 6 betätigt werden soll, der elektrische Antrieb 1 also mittels der mechanischen Bremse 6 in den Stillstand überführt werden soll. Der Schritt S1 wird - gegebenenfalls wiederholt - ausgeführt, bis dies der Fall ist. Insbesondere verharrt die Steuereinrichtung 2 auch dann beim Schritt S1, wenn der elektrische Antrieb 1 auf andere Weise als mittels der mechanischen Bremse 6 in den Stillstand überführt werden soll. Beispielsweise verharrt die Steuereinrichtung 2 auch dann beim Schritt S1, wenn - ohne Ansteuerung der Bremse 6 - der elektrische Antrieb 1 durch entsprechende Ansteuerung des elektrischen Antriebs 1 oder durch entsprechende Ansteuerung des Umrichters 4 in den Stillstand überführt werden soll. Das entscheidende Kriterium, das im Rahmen des Schrittes S1 überprüft wird, ist also nicht, ob der elektrische Antrieb 1 in den Stillstand überführt werden soll. Das entscheidende Kriterium ist, ob ein derartiges Überführen in den Stillstand mittels der Bremse 6 bewirkt werden soll.

Wenn der elektrische Antrieb 1 mittels der mechanischen Bremse 6 in den Stillstand überführt werden soll, geht die Steuereinrichtung 2 zu einem Schritt S2 über. Im Schritt S2 ermittelt die Steuereinrichtung 2 einen Istzustand IZ des elektrischen Antriebs 1, welchen der elektrische Antrieb 1 zu Beginn des jeweiligen Bremsvorgangs aufweist. Der Istzustand IZ ist in der Regel charakteristisch für die im Rahmen des jeweiligen Bremsvorgangs von der Bremse 6 aufzubringende Energie. Die im Rahmen des jeweiligen Bremsvorgangs von der Bremse 6 aufzubringende Energie wiederum hängt von der zu Beginn des jeweiligen Bremsvorgangs herrschenden Bewegungsenergie E des elektrischen Antriebs 1 ab. Die Bewegungsenergie E des elektrischen Antriebs 1 ist bestimmt durch die Beziehung

$$E = \frac{1}{2}J\omega^2 = 2\pi^2 Jn^2 \qquad (1)$$

J ist das wirksame Trägheitsmoment des elektrischen Antriebs 1, gegebenenfalls einschließlich des wirksamen Trägheitsmoment der Last 5. $\omega$ ist die Kreisfrequenz des elektrischen Antriebs 1. n ist die Drehzahl (in der Einheit 1/s).

In manchen Fällen ist das wirksame Trägheitsmoment J konstant bzw. zumindest im Wesentlichen konstant. In diesem Fall kann die Abhängigkeit vom Trägheitsmoment J vernachlässigt werden, da es sich lediglich um eine Konstante handelt. Die Bewegungsenergie E des elektrischen Antriebs zu Beginn des jeweiligen Bremsvorgangs ist in diesem Fall funktional nur von der Drehzahl n abhängig. Weiterhin kann - unabhängig davon, ob das wirksame Trägheitsmoment J konstant ist bzw. zumindest im Wesentlichen konstant ist oder nicht - die Drehzahl n alternativ als absolute Größe oder als relative Größe (also normiert auf eine Nenndrehzahl) verwertet werden. Es ist jedoch erforderlich, zusätzlich ein von der Bremse 6 aufgebrachtes jeweiliges Bremsmoment MK und ein auf den elektrischen Antrieb 1 wirkendes Lastmoment ML zu berücksichtigen. In diesem Fall kann der Istzustand IZ beispielsweise gemäß der Beziehung

$$IZ = E \cdot \frac{MK}{MK + ML} \qquad (2)$$

ermittelt werden. Die Vorzeichen des Bremsmoments MK und des Lastmoments ML in obiger Gleichung sind derart bestimmt, dass sie gleich gerichtet wirken. Wenn also der elektrische Antrieb 1 sowohl mittels des Bremsmoments MK als auch mittels des Lastmoments ML gebremst wird, weist der Istzustand IZ einen kleineren Wert auf als die zu Beginn des jeweiligen Bremsvorgangs herrschende Bewegungsenergie E des elektrischen Antriebs 1. Wenn hingegen das Bremsmoments MK das Lastmoment ML überwinden muss, um überhaupt ein Abbremsen des elektrischen Antriebs 1 zu bewirken, weist der Istzustand IZ einen größeren Wert auf als die zu Beginn des jeweiligen Bremsvorgangs herrschende Bewegungsenergie E des elektrischen Antriebs 1.

Alternativ ist es beispielsweise möglich, den Istzustand IZ gemäß der Beziehung

$$IZ = E \cdot \frac{MK^2}{MK^2 - ML^2} \qquad\qquad (3)$$

zu ermitteln. Auch andere Beziehungen können jedoch - je nach Lage des Einzelfalls - sinnvoll sein.

In einem Schritt S3 ermittelt die Steuereinrichtung 2 anhand des jeweiligen Istzustands IZ des elektrischen Antriebs 1 zu Beginn des jeweiligen Bremsvorgangs einen für den jeweiligen Bremsvorgang erwarteten Einzelverschleiß EV der Bremse 6. Der Einzelverschleiß EV kann beispielsweise proportional zu der im Rahmen des jeweiligen Bremsvorgangs von der Bremse 6 aufzubringenden Energie sein.

In einem Schritt S4 ermittelt die Steuereinrichtung 2 anhand des im Schritt S3 ermittelten Einzelverschleißes EV in Verbindung mit dem bisherigen Gesamtverschleiß GV einen neuen Gesamtverschleiß GV der Bremse 6. Im einfachsten Fall ermittelt die Steuereinrichtung 2 im Schritt S4 den neuen Gesamtverschleiß GV dadurch, dass sie den Einzelverschleiß zum bisherigen Gesamtverschleiß GV hinzu addiert.

In einem Schritt S5 vergleicht die Steuereinrichtung 2 den ermittelten Gesamtverschleiß GV mit einer Verschleißgrenze Gmax (Beispiel: 90% des maximal zulässigen Verschleißes). Wenn die Verschleißgrenze Gmax erreicht ist, geht die Steuereinrichtung 2 zu einem Schritt S6 über. Im Schritt S6 ergreift die Steuereinrichtung 2 geeignete Maßnahmen. Beispielsweise kann sie eine entsprechende Meldung an einen Bediener 7 und/oder eine übergeordnete Steuereinrichtung 8 ausgeben. Es ist sogar möglich, dass die Steuereinrichtung 2 über eine Netzwerkanbindung beispielsweise per E-Mail oder dergleichen eine entsprechende Meldung an einen Kundendienst übermittelt, so dass von dort aus eine Wartung des elektrischen Antriebs 1 bzw. der Bremse 6 veranlasst werden kann.

Wenn die Steuereinrichtung nicht zum Schritt S6 übergeht, geht die Steuereinrichtung 2 zum Schritt S1 zurück.

Gegebenenfalls kann auch vom Schritt S6 aus zum Schritt S1 zurückgegangen werden. Beispielsweise kann die entsprechende Meldung bereits dann ausgegeben werden, wenn der ermittelte Gesamtverschleiß GV noch nicht kritisch ist. In diesem Fall ist ein weiterer Betrieb des elektrischen Antriebs 1 möglich. Wenn der ermittelte Gesamtverschleiß GV hingegen kritisch ist, geht die Steuereinrichtung 2 vom Schritt S6 aus zu einem Schritt S7 über, in welchem sie den elektrischen Antrieb 1 stillsetzt.

Es sind im Rahmen des Schrittes S6 auch komplexere Vorgehensweisen möglich. Beispielsweise kann eine weitergehende Überprüfung erfolgen, ob eine weitere, oberhalb der Verschleißgrenze Gmax liegende weitere Verschleißgrenze (Beispiel: 98% des maximal zulässigen Verschleißes) überschritten wird. Im einen Fall wird lediglich eine Meldung an den Bediener 7 und/oder die übergeordnete Steuereinrichtung 8 ausgeben und sodann zum Schritt S1 zurückgegangen. Im anderen Fall wird eine andere Meldung an den Bediener 7 und/oder die übergeordnete Steuereinrichtung 8 ausgeben und sodann zum Schritt S7 übergegangen.

Es ist möglich, dass die Steuereinrichtung 2 den Istzustand IZ anhand von internen Zuständen der Steuereinrichtung 2 ermittelt. Beispielsweise kann der Steuereinrichtung 2 die Drehzahl n des elektrischen Antriebs 1 durch die Ansteuerung des Umrichters 4 bekannt sein. Andere Größen wie beispielsweise das Trägheitsmoment J, das Bremsmoment MK und das Lastmoment ML können der Steuereinrichtung 2 aufgrund einer entsprechenden Parametrierung bekannt sein. In derartigen Fällen ist es nicht erforderlich, zu Beginn des jeweiligen Bremsvorgangs Messwerte zu erfassen. Oftmals erfolgt jedoch zumindest zu Beginn des jeweiligen Bremsvorgangs die Erfassung derartiger Messwerte, insbesondere der Drehzahl n. In diesem Fall ermittelt die Steuereinrichtung 2 den jeweiligen Istzustand IZ unter Verwendung der erfassten Messwerte n.

Die Skalierung des Einzelverschleißes EV und des Gesamtverschleißes GV kann nach Bedarf vorgenommen werden. Beispielsweise kann es sich um eine Größe in der Dimension Energie handeln. Alternativ kann es sich - beispielsweise, weil das wirksame Trägheitsmoment J konstant ist - um eine Größe in der Dimension Zeit$^2$ handeln. Wiederum alternativ kann es sich - beispielsweise, weil das wirksame Trägheitsmoment J konstant ist und die Drehzahl n als Relativwert verwendet wird - um eine dimensionslose Größe handeln. Welche Vorgehensweise ergriffen wird, liegt im Belieben des Fachmanns.

Die vorliegende Erfindung weist viele Vorteile auf. Insbesondere ist es auf einfache Weise möglich, zuverlässig den Gesamtverschleiß GV der Bremse 6 zu ermitteln. Da im Rahmen der vorliegenden Erfindung weiterhin nur die Werte zu Beginn des jeweiligen Bremsvorgangs relevant sind, ist zum einen eine schnelle Erfassung von sich zeitlich ändernden Größen nicht erforderlich. Weiterhin kann die Berechnung im Hintergrund in einer langsamen Zeitscheibe erfolgen, so dass sie sich nicht bzw. nur in vernachlässigbarem Umfang auf die Auslastungsgrenzen von Prozessoren auswirkt. Das erfindungsgemäße Verfahren kann nach Bedarf in der dem Umrichter 4 zugeordneten Antriebsregelung oder in einer übergeordneten Steuereinrichtung (technologische Steuereinrichtung) realisiert werden.

Zusammengefasst betrifft die vorliegende Erfindung somit folgenden Sachverhalt:

Bei einer mechanischen Bremse 6 eines elektrischen Antriebs 1 soll ein Gesamtverschleiß GV ermittelt werden, der durch Bremsvorgänge hervorgerufen wird, mittels derer der elektrische Antrieb 1 aus einer jeweiligen Bewegung abgebremst wird. Zu diesem Zweck wird im Falle eines jeweiligen Bremsvorgangs anhand eines jeweiligen Istzustands IZ des elektrischen Antriebs 1 zu Beginn des jeweiligen Bremsvorgangs ein für den jeweiligen Bremsvorgang erwarteter Einzelverschleiß EV der Bremse 6 ermittelt. Anhand des ermittelten Einzelverschleißes EV in Verbindung mit dem bisherigen Gesamtverschleiß GV der Bremse 6 wird ein neuer Gesamtverschleiß GV der Bremse 6 ermittelt.

**Patentansprüche**

1. Verfahren zur Ermittlung eines Gesamtverschleißes (GV) einer mechanischen Bremse (6) eines elektrischen Antriebs (1), mittels dessen eine hängende Last (5) bewegt wird,

   - wobei der Gesamtverschleiß (GV) durch Bremsvorgänge der Bremse (6) hervorgerufen wird, mittels derer der elektrische Antrieb (1) aus einer jeweiligen Bewegung abgebremst wird,
   - wobei im Falle eines jeweiligen Bremsvorgangs eine Steuereinrichtung (2) des elektrischen Antriebs (1) einen jeweiligen Istzustand (IZ) des elektrischen Antriebs (1) zu Beginn des jeweiligen Bremsvorgangs ermittelt, der charakteristisch für die im Rahmen des jeweiligen Bremsvorgangs von der Bremse (6) aufzubringende Energie ist,
   - wobei die Steuereinrichtung (2) anhand des Istzustands (IZ) einen für den jeweiligen Bremsvorgang erwarteten Einzelverschleiß (EV) der Bremse (6) ermittelt,
   - wobei die Steuereinrichtung (2) anhand des ermittelten Einzelverschleißes (EV) in Verbindung mit dem bisherigen Gesamtverschleiß (GV) der Bremse (6) einen neuen Gesamtverschleiß (GV) der Bremse (6) ermittelt,
   - wobei die Steuereinrichtung (2) bei der Ermittlung der im Rahmen des jeweiligen Bremsvorgangs von der Bremse (6) aufzubringenden Energie die zu Beginn des jeweiligen Bremsvorgangs herrschende rotatorische Bewegungsenergie (E) des elektrischen Antriebs (1) und zusätzlich ein von der Bremse (6) aufgebrachtes jeweiliges Bremsmoment (MK) und ein auf den elektrischen Antrieb (1) wirkendes Lastmoment (ML) berücksichtigt,
   - wobei die rotatorische Bewegungsenergie (E) des elektrischen Antriebs (1) die Bewegungsenergie der Last (5) mit umfasst,
   - wobei entweder der Antrieb (1) sowohl mittels des Bremsmoments (MK) als auch mittels des Lastmoments (ML) gebremst wird oder das Bremsmoment (MK) das Lastmoment (ML) überwinden muss, um überhaupt ein Abbremsen des elektrischen Antriebs (1) zu bewirken, **dadurch gekennzeichnet**, das die Steuereinrichtung (2) den Istzustand (IZ) anhand einer der Beziehungen

$$IZ = E \cdot \frac{MK}{MK + ML}$$

   und

$$IZ = E \cdot \frac{MK^2}{MK^2 - ML^2}$$

   ermittelt, wobei IZ der Istzustand (IZ), E die rotatorische Bewegungsenergie (E) des elektrischen Antriebs (1), MK das Bremsmoment (MK) und ML das Lastmoment (ML) sind.

2. Verfahren nach Anspruch 1, **dadurch gekenn- zeichnet**, dass zu Beginn des jeweiligen Bremsvorgangs Messwerte (n) erfasst werden und dass der jeweilige Istzustand (IZ) unter Verwendung der Messwerte (n) ermittelt wird.

3. Steuereinrichtung für einen elektrischen Antrieb (1), der mittels einer mechanischen Bremse (6) aus einer jeweiligen Bewegung abbremsbar ist, **dadurch gekennzeichnet, dass** die Steuereinrichtung derart ausgebildet ist, dass sie im Betrieb ein Verfahren nach einem der obigen Ansprüche ausführt.

**Claims**

1. Method for determining a total wear (GV) of a mechanical brake (6) of an electric drive (1), by means of which a suspended load (5) can be moved,

- wherein the total wear (GV) is brought about by braking operations of the brake (6), by means of which the electric drive (1) can be braked from a respective movement,
- wherein, in the event of a respective braking operation, a control device (2) of the electric drive (1) determines a respective actual state (IZ) of the electric drive (1) at the start of the respective braking operation, which actual state (IZ) is characteristic for the energy to be applied by the brake (6) in the context of the respective braking operation,
- wherein the control device (2) determines an anticipated individual wear (EV) of the brake (6) for the respective braking operation on the basis of the actual state (IZ),
- wherein the control device (2) determines a new total wear (GV) of the brake (6) on the basis of the determined individual wear (EV) in connection with the previous total wear (GV) of the brake (6),
- wherein the control device (2), when determining the energy to be applied by the brake (6) in the context of the respective braking operation, takes into consideration the rotary movement energy (E) of the electric drive (1) prevailing at the start of the respective braking operation and also a respective braking torque (MK) applied by the brake (6) and a load torque (ML) acting on the electric drive (1),
- wherein the rotary movement energy (E) of the electric drive (1) also comprises the movement energy of the load (5),
- wherein either the drive (1) is braked both by means of the braking torque (MK) and by means of the load torque (ML), or the braking torque (MK) must overcome the load torque (ML), in order to cause a braking of the electric drive (1),

**characterised in that**
the control device (2) determines the actual state (IZ) on the basis of one of the relationships

$$IZ = E \cdot \frac{MK}{MK+ML}$$

and

$$IZ = E \cdot \frac{MK^2}{MK^2+ML:^2} \quad ,$$

wherein IZ is the actual state (IZ), E is the rotary movement energy (E) of the electric drive (1), MK is the braking torque (MK) and ML is the load torque (ML).

2. Method according to claim 1, **characterised in that** measured values (n) are acquired at the start of the respective braking operation and the respective actual state (IZ) is determined by using the measured values (n).

3. Control device for an electric drive (1), which is able to be braked by means of a mechanical brake (6) from a respective movement, **characterised in that** the control device is embodied such that it performs a method according to one of the above claims during operation.

**Revendications**

1. Procédé de détermination de l'usure (GV) totale d'un frein (6) mécanique d'un entraînement (1) électrique, au moyen duquel une charge (5) en suspension est déplacée,

- dans lequel l'usure (GV) totale est provoquée par des freinages du frein (6), au moyen duquel l'entraînement (1) électrique est freiné dans un mouvement,
- dans lequel, dans le cas d'un freinage, un dispositif (2) de commande de l'entraînement (1) électrique détermine un état (IZ) réel de l'entraînement (1) électrique au début du freinage, qui est caractéristique de l'énergie appliquée par le frein (6) dans le cadre du freinage,
- dans lequel le dispositif (2) de commande détermine, à l'aide de l'état (IZ) réel, une usure (EV) individuelle du frein (6) escomptée pour le freinage respectif,
- dans lequel le dispositif (2) de commande détermine, à l'aide de l'usure (EV) individuelle déterminée, en liaison avec l'usure (GV) totale jusqu'ici du frein (6), une nouvelle usure (GV) totale du frein (6),

- dans lequel le dispositif (2) de commande tient compte, lors de la détermination, de l'énergie à appliquer par le frein (6) dans le cadre du freinage respectif, de l'énergie (E) cinétique de rotation régnant au début du freinage respectif de l'entraînement (1) électrique et, en outre, d'un couple (MK) appliqué par le frein (6) et du couple (ML) de charge agissant sur l'entraînement (1) électrique,
- dans lequel l'énergie (E) cinétique de rotation de l'entraînement (1) électrique comprend l'énergie cinétique de la charge (5),
- dans lequel, ou bien l'entraînement (1) est freiné tant au moyen du couple (MK) de freinage qu'également au moyen du couple (ML) de charge, ou bien le couple (MK) de freinage doit surmonter le couple (ML) de charge pour provoquer somme toute un freinage de l'entraînement (1) électrique,

**caractérisé en ce que** le dispositif (2) de commande détermine l'état (IZ) réel, à l'aide de l'une des relations

$$IZ = E \cdot \frac{MK}{MK + ML}$$

et

$$IZ = E \cdot \frac{MK^2}{MK^2 - ML^2}$$

IZ étant l'état (IZ) réel, E l'énergie (E) cinétique de rotation de l'entraînement (1) électrique, MK le couple (MK) de freinage et ML le couple (ML) de charge.

2. Procédé suivant la revendication 1, **caractérisé en ce qu'**au début du freinage respectif, on détecte des valeurs (n) de mesure et **en ce que** l'on détermine l'état (IZ) réel en utilisant les valeurs (n) de mesure.

3. Dispositif de commande d'un entraînement (1) électrique, qui peut être freiné dans un mouvement au moyen d'un frein (6) mécanique, **caractérisé en ce que** le dispositif de commande est constitué de manière à effectuer en complément un procédé suivant l'une des revendications précédentes.

FIG 1

FIG 2

| | |
|---|---|
| S1 | "6"? |
| S2 | $IZ = IZ(n, J, MK, ML)$ |
| S3 | $EV = EV(IZ)$ |
| S4 | $GV = GV + EV$ |
| S5 | $GV = Gmax?$ |
| S6 | INFO |
| S7 | OFF |

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10147817 A1
- US 20030061872 A1

- EP 1435470 A1
- DE 102009016664 A1